# EUROPÄISCHE PATENTSCHRIFT

(11) **EP 0 629 299 B1**
(45) Veröffentlichungstag und Bekanntmachung des Hinweises auf die Patenterteilung: **17.07.1996**
(21) Anmeldenummer: 93903810.5
(22) Anmeldetag: 19.02.1993
(51) Int. Cl.: G02B 6/44

(54) **OPTISCHES KABEL UND VERFAHREN ZU DESSEN HERSTELLUNG**
OPTICAL CABLE AND PROCESS FOR MANUFACTURING THE SAME
CABLE OPTIQUE ET SON PROCEDE DE FABRICATION

(30) Priorität: 03.03.1992 DE 4206652
(43) Veröffentlichungstag der Anmeldung: 21.12.1994
(73) Patentinhaber: SIEMENS AKTIENGESELLSCHAFT, 80333 München (DE)
(72) Erfinder: OESTREICH, Ulrich, D-8000 München 70 (DE); SCHNEIDER, Reiner, D-8624 Ebersdorf (DE)
(86) Internationale Anmeldenummer: DE9300146
(87) Internationale Veröffentlichungsnummer: WO9318424

(56) Entgegenhaltungen:
- EP-A- 0 295 130
- EP-A- 0 495 400
- DE-A- 3 839 109
- FR-A- 2 549 235
- GB-A- 2 040 063
- GB-A- 2 199 961

## Beschreibung

Die Erfindung betrifft ein optisches Kabel mit mehreren Bandstapeln aus Lichtwellenleiter-Bändchen, die in mindestens einer Lage um ein Kernelement herum angeordnet sind.

Ein optisches Kabel dieser Art ist aus der DE-A1-38 39 109 bekannt. Dessen Kabelseele besteht aus mehreren Kammerelementen mit etwa rechteckförmigen Öffnungen, die um ein zugfestes Element angeordnet sind. Diese Kammerelemente dienen der Aufnahme von Bandstapeln aus Lichtwellenleiter-Bändchen.

Ein derart aufgebautes optisches Kabel aus Kammerelementen bietet zwar den Bandstapeln bei entsprechender Wandstärke zuverlässigen Schutz gegenüber Radial- und Umfangskräften. Für die Lagesicherung der Kammerelemente ist allerdings eine spezielle Formgebung der Kammerelemente mit sektorförmigen Seitenwänden erforderlich.

Der Erfindung liegt die Aufgabe zugrunde, einen Weg aufzuzeigen, wie bei einem optischen Kabel die Lagesicherung der Bandstapel in einfacherer Weise gewährleistet werden kann.

Diese Aufgabe wird bei einem optischen Kabel der eingangs genanten Art dadurch gelöst, daß in den von den Bandstapeln gebildeten Zwickelräume als selbständige Stränge ausgebildete Stützelemente vorgesehen sind, und daß sich diese Stützelemente in radialer Richtung mindestens genauso weit wie die Bandstapel erstrecken, derart, daß diese Stützelemente zu einer Lagesicherung der Bandstapel in radialer Richtung und/oder in Umfangsrichtung beitragen.

Bei der Erfindung ist es somit nicht notwendig, speziell geformte Kammerelemente vorzusehen. Durch diese Maßnahme ist also sowohl der Aufbau als auch die Fertigung eines optischen Kabels mit mehreren Bandstapeln vereinfacht.

Dadurch, daß die radiale Erstreckung der Stützelemente (SEl bis SEn) gleich der radialen Erstrecken der Bandstapel (BSl bis BSn) oder größer als diese gewählt ist, ist die Lagesicherung der Bandstapel im wesentlichen den Stützelementen zugeordnet. Die Stützelemente wirken dabei als Abstandshalter in radialer Richtung gegenüber etwaigen radial wirkenden Kräften und/oder auch als Abstandshalter bzw. Trennwände in Umfangsrichtung für die um das Kernelement herum angeordneten Bandstapel bei etwaig in Umfangsrichtung auftretenden Kräften.

Gemäß einer zweckmäßigen Weiterbildung der Erfindung ist es sogar möglich, auf die Kammerelemente ganz zu verzichten. Eine derartige Konstruktion zeichnet sich vor allem dadurch aus, daß trotz der kammerelement-losen Bandstapel diese in ihrer Lage ausreichend gesichert werden können, indem Stützelemente in deren Zwischenräumen angeordnet sind.

Gemäß einer weiteren zweckmäßigen Weiterbildung der Erfindung erstrecken sich die Stränge der Stützelemente radial etwas weiter nach außen als die Bandstapel. Dadurch können die Stützelemente eine abstützende Pfeilerfunktion gegenüber radial angreifenden Querdruckkräften ausüben.

Gemäß einer anderen Ausbildung der Erfindung füllen die Stützelemente die Zwischenräume zwischen den Bandstapeln weitgehend, d.h., ohne Spielraum, aus. Auf diese Weise wird vorteilhaft sichergestellt, daß die zu Bandstapeln zusammengefaßten Lichtwellenleiter-Bändchen an ihren Plätzen in den jeweiligen Bandstapeln um den Umfang gesehen gehalten werden. Man erreicht mit Hilfe dieser Maßnahme also eine gewisse Lagesicherung der Bandstapel in Umfangsrichtung. Dies spielt insbesondere dann eine Rolle, wenn Querdruckkräfte in Umfangsrichtung angreifen. In diesem Fall ist für die Stützelemente zweckmäßig ein weiches Material verwendet.

Gemäß einer weiteren vorteilhaften Weiterbildung der Erfindung, füllen die Stützelemente die Zwischenräume zwischen den Bandstapeln nur teilweise, d.h., jeweils mit einem Freiraum zu den beiden benachbarten Bandstapeln, aus. Sie dienen dann in erster Linie als sich radial erstreckende Abstandshalter und Stützpfeiler in den Zwischenräumen der Bandstapel. Für diese Funktion der Stützelemente ist für diese vorteilhaft ein steifes, glattes Material gewählt, das insbesondere innerlich gestützt sein kann. Um diese Art von Stützelementen weitgehend am Verschieben oder Umkippen zu hindern, werden die Stützelemente zweckmäßigerweise in ihrer Lage fixiert.

Die Erfindung betrifft auch ein Verfahren zur Herstellung eines optischen Kabels, welches dadurch gekennzeichnet ist, daß die als selbständige Stränge ausgebildeten Stützelemente in die von den Bandstapeln gebildeten Zwickelräume von außen mit einer Erstreckung in radialer Richtung mindestens genauso weit wie die radiale Erstreckung der Bandstapel eingebracht werden, derart, daß die Bandstapel in ihrer Lage in radialer Richtung und/oder in Umfangsrichtung gesichert werden.

Sonstige Weiterbildungen der Erfindung sind in Unteransprüchen wiedergegeben.

Die Erfindung und ihre Weiterbildungen werden nachfolgend anhand von Zeichnungen näher erläutert.

Es zeigen:
- Figur 1: im Querschnitt in vergrößerter Darstellung ein optisches Kabel gemäß der Erfindung mit einer Lage aus Bandstapeln und dazwischenliegenden Stützelementen,
- Figur 2: im Querschnitt eine Abwandlung des optischen Kabels nach Figur 1 mit einem rohrförmigen Kernelement,
- Figur 3: im Querschnitt ein Ausführungsbeispiel eines erfindungsgemäßen optischen Kabels mit zwei Lagen aus Bandstapeln und dazwischen liegenden Stützelementen,
- Figur 4: in schematischer Darstellung eine Einrichtung zur Durchführung des erfindungsgemäßen Verfahrens, und
- Figur 5: eine Abwandlung der Einrichtung nach Figur 4.

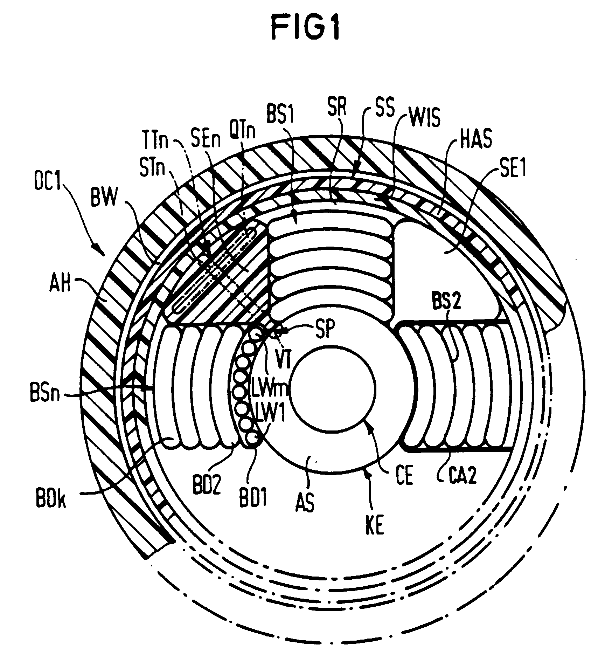

Figur 1 zeigt vergrößert im Querschnitt den Aufbau eines optischen Kabels OC1. Seine Konstruktion weist als Kabelelemente ein Kernelement KE, eine auf diesem aufgebrachte Lage aus vorzugsweise etwa rechteckförmigen Bandstapeln BSl bis BSn mit jeweils ebenfalls vorzugsweise etwa flachen, rechteckförmigen vorzugsweise Lichtwellenleiter-Bändchen BD1 bis BDk, zwischen diesen Bandstapeln BSI bis BSn jeweils eingefügte Stützelemente SEl bis SEn, eine Abdeckschicht SS und eine äußere Ummantelung mit einer Bewehrung BW und einer Außenhülle AH auf. In Figur 1 sind zur besseren Veranschaulichung nur wenige Bandstapel BSl - BSn und dazwischen eingelagerte Stützelemente SEl - SEn eingezeichnet. Aus diesem Grund sind deren Abmessungen vergrößert dargestellt.

Im Zentrum des kreiszylinderförmgien Kernelements KE ist ein zug- und stauchfestes, kreiszylinderförmiges Element CE vorgesehen, um das optische Kabel OCl gegen Zug- und Stauchbeanspruchungen zu schützen. Vorteilhaft kann dieses zugfeste Element CE zum Beispiel aus mehreren Stahl- oder Aramidfasern aufgebaut sein. Auf diesem zug- und stauchfesten Element CE ist eine Aufdickungsschicht AS aufgebracht. Diese ist so dimensioniert, daß eine gewünschte Anzahl von Bandstapeln BSl bis BSn ringförmig in einer Lage direkt um die Aufdickungsschicht AS herum angeordnet werden können. Zweckmäßigerweise ist für die Aufdickungsschicht AS ein relativ hartes Material verwendet, wie zum Beispiel vorteilhaft PE oder PP. Auf diese Weise kann das Kernelement KE für die auf ihm vorzugsweise direkt aufgebrachte Lage aus Bandstapeln BSl bis BSn und den jeweils dazwischen eingelagerten Stützelementen SEl bis SEn wie ein steifes, stauchfestes Fundament wirken.

Die Bandstapel BSl bis BSn aus Lichtwellenleiter-Bändchen sind z.B. durch Aufseilen in einer Lage ringförmig auf dem Kernelement KE direkt anliegend angeordnet. Jeweils k Lichtwellenleiter-Bändchen BDl bis BDk mit jeweils m Lichtwellenleitern LWl bis LWm sind zu einem der n Bandstapel BSl bis BSn zusammengefaßt. Die Bandstapel BSl bis BSn weisen im Querschnitt ein in etwa rechteckförmiges Profil auf. In Figur 1 setzt sich der Bandstapel BSn beispielhaft aus fünf Lichtwellenleiter-Bandleitungen mit je acht Lichtwellenleitern zusammen. Im Querschnittsbild von Figur 1 liegt die innerste Bandleitung BDl dieses Stapels BSn vorzugsweise direkt, sich in Umfangsrichtung anschmiegend an der Aufdickungsschicht AS des Kernelementes KE an. In dieser Schnittebene verläuft die innerste Bandleitung BDl also bogenförmig gekrümmt. Auf dieser innersten Bandleitung BDl türmen sich schichtenartig radial nach außen die übrigen vier Bandleitungen auf, wobei sich diese Bandleitungen im wesentlichen lose aneinanderschmiegen. Zwischen den Bandleitungen BDl - BDK und/oder in den verbleibenden Zwischenräumen der Kabelseele können zweckmäßigerweise zur Erzielung der Längswasserdichtigkeit übliche Bündel- oder Füllmassen eingebracht werden. Um die Bandleitungen BDl bis BDk jeweils an ihren Plätzen in den Bandstapeln BSl bis BSn zu halten, können diese gegebenenfalls mit einer haftenden Füllmasse aufeinander und/oder auf das Kernelement KE geklebt werden. (Auch können verbleibende Zwischenräume mit dieser haftenden Füllmasse vorteilhaft versehen werden). Vorteilhaft für diesen Zweck sind insbesondere PIB-haltige Massen, wie zum Beispiel Naptel-Massen (Naphta - Chemic). Als zusätzliche Maßnahme gegen das seitliche Verrutschen der Bandleitungen BDl bis BDk der Bandstapel BDl bis BSn, werden diese zweckmäßig so dimensioniert, daß ihre radiale Erstreckung kleiner ihrer Erstreckung in Umfangsrichtung ist, d.h. sie sind breiter als hoch. Da durch diese Dimensionierung die Auflagefläche der Bandstapel BSl bis BSn auf dem Kernelement KE vergrößert ist, und zugleich deren Angriffsfläche in radialer Richtung gegenüber Querdruckkräften verkleinert ist, ist ein Kabelaufbau mit solchen Bandstapeln BSl bis BSn in gewissem Umfang gegenüber Querdruckkräften unempfindlicher. Vorteilhaft erstrecken sich diese Bandstapel BSl bis BSn in radialer Richtung zwischen 1 mm und 3 mm, bevorzugt zwischen 1,5 mm und 2 mm. Ihre Erstreckung längs des Umfangs ist zweckmäßig zwischen 1,5 mm und 5 mm, bevorzugt zwischen 2 mm und 3 mm, gewählt.

Indem die Bandstapel BSl bis BSn vorzugsweise helixförmig gewendelt direkt auf der Längsachse des kreiszylinderförmigen Kernelementes KE eng anliegend aufgebracht sind, ergibt sich ein kompakter, rotationssymmetrischer Kabelaufbau mit konstantem Außendurchmesser. Der in Umfangsrichtung zur Verfügung stehende Wickelraum auf dem Kernelement KE kann also optimal genutzt werden, so daß sich in Umfangsrichtung eine große Packungsdichte an Bandstapeln BSl bis BSn mit Bandleitungen BDl bis BDk bei gleichzeitiger Minimierung des Kabeldurchmessers erzielen läßt.

Gegebenenfalls ist es möglich, zur besseren Raumausnutzung die Lichtwellenleiter-Bändchen BDl - BDk innerhalb eines Stapels nach außen hin mit einer zunehmenden Zahl von Lichtwellenleitern zu versehen, so daß der Bändchenstapel einen etwa keilförmigen Querschnitt erhält. Dadurch wird eine bessere Raumausnutzung im Bereich der Kabelseele erzielt.

Zum Schutz der Bandstapel BSl - BSll können diese auch in Kammerelementen untergebracht werden. In Figur 1 ist ein derartiges Kammerelement CA2 als dicke Linie eingezeichnet und umschließt somit den Bandstapel BS2. Diese Kammerelemente z.B. CA2 weisen vorzugsweise einen etwa U-förmigen Querschnitt auf und sind vorzugsweise nach außen offen. Diese Kammerelemente brauchen keine sektorförmigen Seitenwände aufweisen, weil ihre Lagesicherung durch die Stützelemente SEl - SEn bewirkt wird. Auch können die Kammerwände sehr dünn, d.h. filigran, ausgebildet sein, wobei sie weder eine stützende Wirkung in radialer Richtung noch eine Lage-stabilisierende Wirkung in Umfangsrichtung aufweisen müssen. In diese Kammerelemente können Lichtwellenleiter gegebenenfalls auch lose oder vorzugsweise als etwa rechteckförmiges Bündel zusammengefaßt eingelegt sein.

Zweckmäßigerweise ist für die Bandstapel BDl - BDn eine Schlaglänge zwischen 400 und 700 mm gewählt.

Die Stützelemente SEl - SEn sind in Figur 1 von außen jeweils im Zwischenraum (Zwickel) zweier benachbarter, kammerloser Bandstapel (z.B. mit Hilfe eines Verseilvorgangs) angebracht. Zwei Arten von Stützelementen SEl - SEn sind in die Zwischenräume der Bandstapel BSl - BSn einfügbar. Im ersten Fall füllen die Stützelemente SEl - SEn die Zwischenräume annähernd vollständig aus. Dann wird für sie zweckmäßigerweise ein weiches Material gewählt. Im zweiten Fall füllen die Stützelemente SEl - SEn die Zwischenräume nur teilweise aus. Für sie wird vorteilhaft ein steifes Material gewählt, insbesondere ein innerlich gestütztes.

Im ersten Fall weisen die Stützelemente zweckmäßig ein etwa dreieck- bzw. keilförmiges Profil im Querschnitt auf (vgl. Figur 1), um die Zwischenräume zwischen den Bandstapeln BSl - BSn möglichst vollständig auszufüllen.

Um die kammerlosen Bandstapel BSl bis BSn mit den Bandleitungen BDl bis BDk bezüglich ihrer Lage um den Umfang zu sichern, das heißt also, deren Bandleitungen BDl bis BDk in Umfangsrichtung im jeweiligen Stapel und am Platz zu halten, ertrecken sich die Stützelemente SEl bis SEn in radialer Richtung mindestens genauso weit wie die Bandstapel BSl bis BSn. Diese Stützelemente SEl bis SEn liegen mit ihrem inneren Ende direkt auf dem Kernelement KE auf. Dadurch wird sichergestellt, daß die Stützelemente SEl bis SEn in erster Linie eine Funktion als selbständige, sich auf dem Kernelement KE abstützende und lagesichernde Trennbzw. Zwischenwände für die Bandstapel BSl bis BSn übernehmen. Im Bereich der Aufliegefläche der jeweiligen Stützelemente SEl bis SEn auf den Kernelement KE (Basis) berühren deren Außenwände zweckmäßigerweise die Außenwände der jeweils beiden benachbarten Bandstapel BSl bis BSn. Die jeweils beiden benachbarten Bandstapel BSl bis BSn weisen dort einen Abstand (Spaltbreite) zwischen 0,5 mm und 1,5 mm auf. In Figur 1 füllt zum Beispiel das Stützelement SEn den schmalen inneren Spalt SP der Zwickelspitze an der Basis der beiden benachbarten Bandstapel BSn und BSl vollständig aus. Der Spalt SP zwischen den beiden, auf dem Kernelement KE direkt aufliegenden, innersten Bandleitungen BDl an der Basis der beiden benachbarten Bandstapel BSl und BSn wird also durch das Stützelement SEn vollständig überbrückt. Da sich die Zwickel zwischen den Bandstapeln BSl bis BSn radial nach außen V-förmig, aufweiten, wird auch zweckmäßigerweise die Wandstärke der Stützelemente SEl bis SEn nach außen hin vergrößert. Sie füllen den Leerraum zweier benachbarter Bandstapel BS1 bis BSn möglichst aus, um deren Seitenwände aus lose übereinandergeschichteten Bandleitungen BDl bis BDk seitlich abzustützen. Die eingelagerten Stützelemente SEl bis SEn wirken also zwischen den Bandstapeln BSl bis BSn wie seitlich abstützende Puffer. Bei auftretenden Knick-, Biege-, Torsions-, oder Druckbeanspruchungen wird dadurch in gewissem Umfang verhindert, daß sich die Bandleitungen jeweils aus ihrem Stapelverbund verschieben oder gar herauslösen können. In Umfangsrichtung weisen die Stützelemente SEl bis SEn im Innenbereich zweckmäßigerweise eine Wandstärke von mindestens 0,25, bevorzugt zwischen 0,5 und 1,5 mm auf. Für die Stützelemente SEl - SEn sind in Umfangsrichtung im Außenbereich mindestens 2 mm, insbesondere zwischen 3 mm und 5 mm, gewählt.

Zur Unterstützung der Puffer- und Halterfunktion der Stützelemente SEl bis SEn in Umfangsrichtung ist für diese zweckmäßigerweise ein relativ leicht verformbares Material gewählt. Dieses weist vorteilhaft einen Elastizitätsmodul zwischen 0,001 und 1 N/mm² auf. Für diesen Zweck eignen sich bevorzugt zum Beispiel Stränge aus elastischem PU-Schaum, dicke weiche Woll- oder Baumwollfäden, Garn- oder Rovingstränge aus Textil- oder Glasfilamenten, Schaumgummi-Materialien, usw.

Zusätzlich können diese Materialien zweckmäßigerweise mit üblichen Quellmitteln versehen werden, um ein dichtes Anliegen der Stützelemente SEl bis SEn an den Seitenwänden der lose zu Bandstapeln BSl - BSn aufgeschichteten Bandleitungen BDl bis BDk in den Zwickelräumen zu gewährleisten.

Die relativ weichen Stützelemente SEl bis SEn können bei entsprechender Auslegung zusätzlich auch einen gewissen Schutz gegenüber Radialkräften bieten. Dazu wird vorteilhaft die radiale Erstreckung der Stützelemente SEl bis SEn größer als die radiale Erstreckung der Bandstapel BSl bis BSn gewählt. Insbesondere können die Stränge der Stützelemente SEl bis SEn die Stapel BSl bis BSn um 0,5 mm bis 2,5 mm überragen. Mit Hilfe dieser Maßnahmen erreicht man auch bei einer geringen Steifigkeit der Stützelemente SEl - SEn, daß diese radial wirkende Kräfte wie absorbierende Pfeiler auffangen. Dieser Mechanismus wird insbesondere im Zusammenspiel mit dem als stauchfestes Fundament wirkenden Kernelement KE erzielt. Wirkt beispielsweise eine Querdruckkraft radial nach innen im Bereich des Stützelements SEl auf das optische Kabel OCl ein, so wird zwar das Stützelement SEl etwas zusammengedrückt und elastisch deformiert. Durch das direkte Anliegen des Stützelements SEl auf dem Kernelement KE wird diese Kraft jedoch absorbiert und radial nach innen zum Kernelement KE abgeleitet. Dadurch wird eine Stauchung der Bandstapel BSl bis BSn in gewissem Umfang vermieden.

Im zweiten Fall füllen die Stützelemente SEl - SEn die Zwischenräume (Zwickel) zwischen den Bandstapeln BSl - BSn nur teilweise aus. Sie sind also jeweils mit einem Freiraum zu beiden Seiten, d.h. zu ihren beiden benachbarten Bandstapeln, in den Zwischenräumen angebracht. Die Stützelemente SEl - SEn dienen dann in erster Linie als sich radial erstreckende Abstandshalter und Stützpfeiler gegenüber radial wirkenden Kräften. Zweckmäßigerweise ist für diese Art von Stützelementen SEl - SEn ein steifes, glattes Material gewählt. Zur Unterstützung der Pfeiler- und Stützwirkung der Stützelemente SEl bis SEn kann vorteilhaft ein Material mit einem E-Modul von mindestens 500 - 5000 N/mm², bevorzugt zwischen 700 und 2000 N/mm², verwendet sein. Vorteilhaft überragen sie die Bandstapel BSl - BSn um etwa 0,5 - 1 mm. Durch diese Maßnahme und aufgrund ihrer Steifigkeit ist dadurch ein definierter Abstand zwischen den Bandstapeln BSl - BSn und einer zusätzlich auf den Stützelementen aufgebrachten, geschlossenen Abdeckschicht SS sichergestellt. Somit steht ein freier Stauchraum SR als Sicherheitszone bei auftretenden Radialkräften zur Verfügung.

Die verbleibenden Spalte zu den jeweils beiden benachbarten Bandstapeln erlauben vorteilhaft eine gewisse Verschiebbarkeit der einzelnen Elemente gegeneinander, ohne daß es zu deren Beanspruchung kommt. Dabei übernehmen die Stützelemente SEl - SEn in zweiter Linie die Funktion von Trennwänden und stellen eine Art Abstandshalter auch in Umfangsrichtung dar. Um diese Art von Stützelementen SEl - SEn am Verschieben oder Umkippen, zum Beispiel unmittelbar nach dem Aufseilen, zu hindern, werden sie zweckmäßigerweise in ihrer Lage fixiert. Die Fixierung kann zum Beispiel am Grund auf dem Kernelement KE und/oder am radial äußeren Ende der Stützelemente SEl - SEn erfolgen. So können die Stützelemente SEl - SEn beispielsweise auf das Kernelement KE geklebt werden und/oder in geeignete, vorbereitete Vertiefungen des Kernelementes KE gestellt oder gesteckt werden. In Figur 1 ist eine nutförmige Vertiefung VT im Kernelement KE zur Aufnahme des Stützelementfußes des Stützelementes SEn strichpunktiert angedeutet. An ihrem radial äußeren Ende können die Stützelemente SEl - SEn beispielsweise mit einer äußeren, geschlossenen Abdeckschicht SS zur Lagefixierung umgeben werden. Die Fixierung kann vorzugsweise auch mit einer Haltewendel erfolgen, die helixförmig auf die Stützelemente SEl - SEn aufgebracht wird. Es ist auch möglich die Stützelemente SEl - SEn mit der Abdeckschicht oder der Haltewendel zu verkleben. Gegebenenfalls ist eine gewisse Fixierung auch dadurch möglich, daß die verbleibenden Zwischenräume mit einer haftenden, zähen Masse (PIB-haltige Masse) gefüllt werden. Die Gefahr des Umkippens wird ebenfalls dadurch gemindert, daß die Stützelemente SEl - SEn schraubenlinienförmig um die Kabellängsachse verlaufen und somit eine Art Stützring bilden.

Die Stützelemente SEl - SEn können im Querschnitt gesehen auch aus unterschiedlichen Materialien zusammengesetzt sein. Sie können insbesondere innerlich gestützt sein. So ist beispielsweise beim Stützelement SEn von Figur 1 ein radial über die volle Länge dieses Stützelementes sich erstreckender, strichpunktiert dargestellter Stützkörper STn vorgesehen. Dieser Stützkörper STn besteht aus einem relativ harten, wenig kompressiblen Material für eine definierte, radiale Abstandshalterung, insbesondere für eine stauchfeste Pfeilerfunktion in radialer Richtung, während die rechts und links verbleibenden Bereiche des Stützelementes SEn polsternde Eigenschaften aufweisen und nur der Lagesicherung der benachbarten Bandstapel BSl und BSn in Umfangrichtung dienen.

Zur Lagesicherung kann vorteilhaft auch ein sich quer zur radialen Erstreckung des Stützelementes SEn verlaufender, steifer Stützkörper QTn eingelagert, insbesondere eingespritzt, sein. In Figur 1 ist dieser Stützkörper QTn strichpunktiert im Stützelement SEn eingezeichnet. Der Stützkörper QTn ist zweckmäßigerweise im radial äußeren Bereich des Stützelementes SEn plaziert. Er weist dadurch vorteilhaft eine bevorzugte Biegeebene auf, die ein Umkippen des Stützelementes SEn erschwert. Diese Art von Stützelement wirkt bevorzugt in Umfangsrichtung. Eine Kombination der beiden Stützkörper STn und QTn führt schließlich zu einem T-trägerähnlichen, optimierten Stützkörper TTn, der deren Vorteile in sich vereinigt: er verleiht dem Stützelement SEn eine stauchfeste Pfeilerfunktion in radialer Richtung und zugleich eine ausreichende Lagesicherung in Umfangsrichtung.

In allen drei Ausführungsvarianten des Stützkörpers ist für die verbleibenden Bereiche des Stützelementes SEn jeweils ein weiches Material mit polsternden Eigenschaften vorteilhaft verwendet.

Außen auf die Stützelemente SEl bis SEn ist zweckmäßig die, zum Beispiel folienförmig ausgebildete, Abdeckschicht SS aufgebracht. Gegebenenfalls kann die Abdeckschicht SS als querdruckfestes Rohr ausgebildet sein. Die Schicht SS liegt zweckmäßig auf den, gegebenenfalls die Bandstapel BSl bis BSn überragenden, Stützelementen SEl bis SEn auf, so daß sie die empfindlichen Bandstapel BSl bis BSn nach außen hin abdeckt. Zweckmäßigerweise sind die Stützelemente SEl - SEn bzw. deren Stützkörper STn in ihren radial äußeren Bereichen in Umfangsrichtung gekrümmt oder abgerundet, um ein planes Aufliegen der Abdeckschicht SS zu gewährleisten. Zwischen der Abdeckung SS und den Bandstapeln BSl bis BSn steht dann ein freier Stauchraum SR als Sicherheitszone zur Verfügung. Die Schutzschicht SS kann vorteilhaft eine harte dünne Außenschicht HAS und eine weiche Innenschicht WIS aufweisen. Die harte Außenschicht HAS schützt die Bändchenstapel vorteilhaft vor Deformationen. Die weiche Innenschicht WIS stellt ein Polster für die Bandstapel BSl bis BSn dar.

Schließlich kann auf dieser Abdeckschicht SS für den Schutz gegen mechanische Beanspruchungen gegebenenfalls eine Bewehrung BW und/oder eine mehrschichtige Außenhülle AH aufgebracht werden, so daß das optische Kabel OC1 entsteht.

Bei dieser Kabelkonstruktion ist die Lagesicherung der Bandstapel BSl bis BSn im wesentlichen den Stützelementen SEl bis SEn zugeordnet. Diese dienen als stauchfeste Stützelemente bzw. radiale Abstandshalter und/oder als Pufferelemente bzw. Lagesicherung zwischen den Bandstapeln BSl bis BSn. Demgegenüber können die Bandstapel BSl bis BSn kaum mechanisch beansprucht werden. Sie bilden selbständige, unabhängig herstellbare, vorzugsweise kammerlose Verseilelemente, die sich aus lose übereinandergeschichteten Bandleitungen BDl bis BDk zusammensetzen.

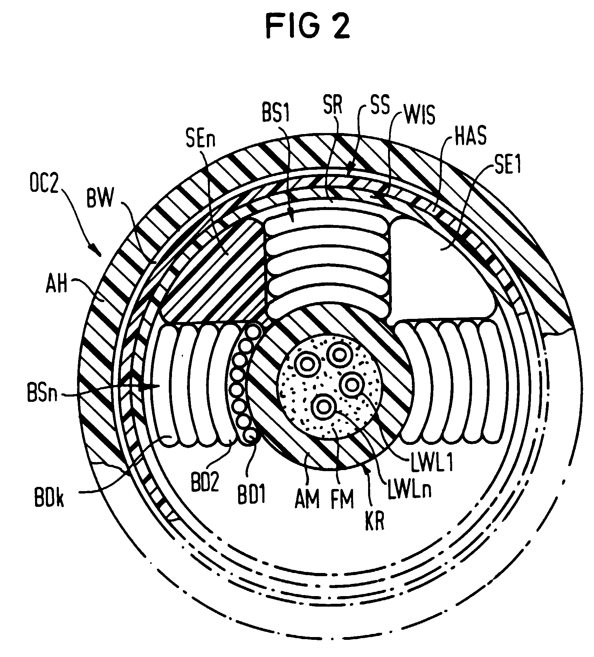

In Figur 2 ist in Abwandlung zu Figur 1 das Kernelement des optischen Kabels OC2 als Rohr KR ausgebildet. Die unverändert übernommenen Elemente sind mit den gleichen Bezugszeichen wie in Figur 1 versehen. Der rohrförmige Außenmantel AM eines optischen Übertragungselements enthält mehrere Lichtwellenleiter LWLl bis LWLn in einer Füllmasse FM eingeschlossen. Die Festigkeit der Konstruktion der Kabelseele wird durch eine ausreichende Dimensionierung dieses Außenmantels AM erreicht. Vorteilhaft ist der Außenmantel AM mehrschichtig aufgebaut.

Anstelle der Lichtwellenleiter LWLl bis LWLn können in dem als Rohr KR ausgebildeten Kernelement gegebenenfalls auch konventionelle elektrische Leiter oder zugfeste Elemente, wie zum Beispiel Stahl- oder Aramiddrähte, eingebracht werden. Alternativ dazu ist es aber auch möglich, dieses Rohr KR freizulassen und es zum Beispiel für die Längsleitung von Druckgas für Überwachungszwecke des optischen Kabels OC2 zu verwenden.

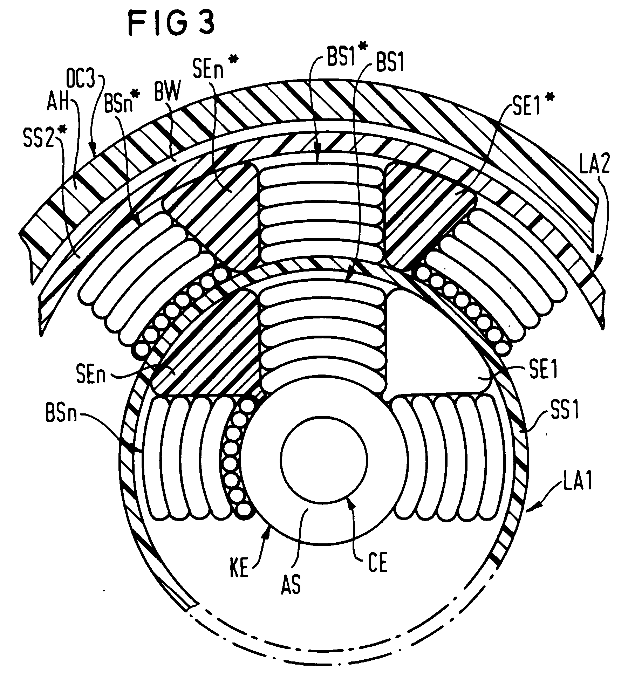

Die Figur 3 zeigt ein zweilagig aufgebautes optisches Kabel OC3. Dessen Kabelseele weist eine analog zu Figur 1 identische innere Lage LA1 mit einer Abdeckschicht SSl auf. Unverändert übernommene Elemente aus Figur 1 sind mit den gleichen Bezugszeichen wie in Figur 1 versehen. Auf dieser ersten, inneren Lage LA1 ist eine gleichartig aufgebaute, zweite Verseillage LA2 mit Stützelementen SEl* bis SEn*, mit Bandstapeln BSl* bis BSn* und mit einer auf diesen angeordneten Abdeckschicht SS2* aufgebracht. In der äußeren Lage LA2 können im Vergleich zur inneren Lage LA1 hinsichtlich Form und Größe unterschiedliche Bandstapel und/oder Stützkörper zweckmäßig verwendet sein.

Mehrlagige Anordnungen werden zweckmäßig im Gegenschlag verseilt. Dadurch wird eine gesicherte, fortlaufende Abstützung der Stützelemente der verschiedenen Lagen gewährleistet.

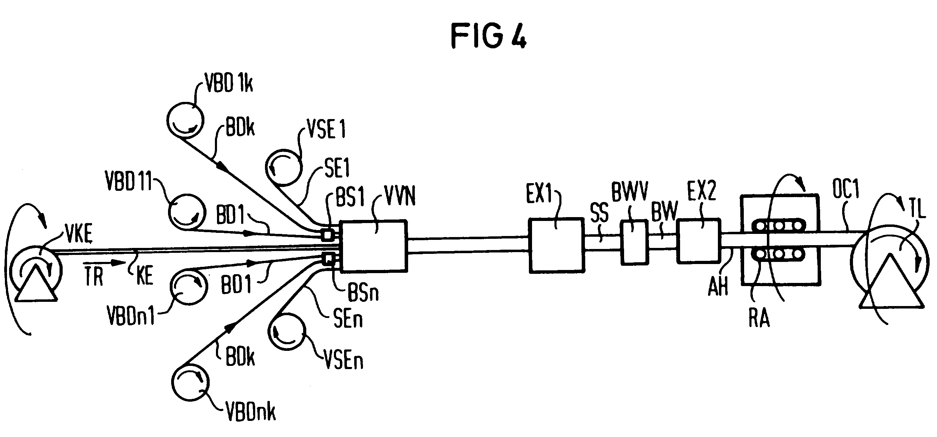

Figur 4 veranschaulicht, wie ein optisches Kabel OC1 nach Figur 1 hergestellt werden kann. Das zentrale Kernelement KE wird entsprechend dem Pfeil TR nach rechts von einer rotierenden Vorratsspule VKE abgezogen. Von Vorratsspulen (VBDll bis VBDlk, ..... , VBDnl bis VBDnk), die feststehend ringförmig um die Längsachse des Kernelements KE angeordnet werden, werden Lichtw-llenleiter-Bändchen BD1 bis BDk abgespult. Diese werden zu etwa rechteckförmigen Bandstapeln BSl bis BSn zusammengefaßt (in Figur 4 durch kleine Rechtecke angedeutet) und einem gemeinsamen Verseilpunkt VP in einer Vorrichtung VVN (,die analog zu einem Verseilnippel ausgebildet ist,) zugeführt. Im Verseilpunkt der Vorrichtung VVN werden die rechteckförmigen Bandstapel BSl bis BSn ringförmig um das Kernelement KE herum verseilt. Simultan zu diesem Aufseilvorgang der Bandstapel BSl bis BSn werden in einer nachfolgenden zweiten rotationssymmetrischen und feststehenden Anordnung aus Vorratsspulen VSEl bis VSEn die Stützelemente SEl bis SEn abgespult und ebenfalls dem gemeinsamen Verseilpunkt VP der Vorrichtung VVN zugeführt. Die Stützelemente SEl bis SEn werden zwischen die Zwickel der Bandstapel BSl bis BSn von außen eingeführt. Zum Schutz der Bandstapel BSl bis BSn gegen Deformationen und Stauchungen wird auf dieser Lage aus Stützelementen SEl bis SEn eine Abdeckschicht SS mit Hilfe eines nachfolgenden Extruders EX1 aufextrudiert. Zum zusätzlichen mechanischen Schutz gegen Zug-, Biege- und Torsionsbeanspruchungen kann vorteilhaft eine Bewehrung BW mit einer Vorrichtung BWV auf der Abdeckschicht SS aufgebracht werden. Im Extruder EX2 wird schließlich gegebenenfalls eine mehrschichtige Außenhülle AH auf der Bewehrung BW aufgebracht. Ein nachgeordneter rotierender Raupenabzug RA umfaßt das so hergestellte optische Kabel OC1 formschlüssig und führt dieses einer rotierenden Aufwickeltrommel TL zu. Der Raupenabzug RA dient dabei dem Zweck, das zentrale Kernelement KE von seiner Vorratsspule VKE, die Verseilelemente wie die Lichtwellenleiter-Bandleitungen BDl bis BDk und die Stützelemente SEl bis SEn von ihren Vorratsspulen abzuziehen und ihrem gemeinsamen Verseilpunkt in der Vorrichtung VVN zuzuführen. Eine Torsion des zentralen Kernelements KE wird verhindert, indem die Trommeln VKE und TL sowie der Raupenabzug RA synchron und gleichsinnig rotieren.

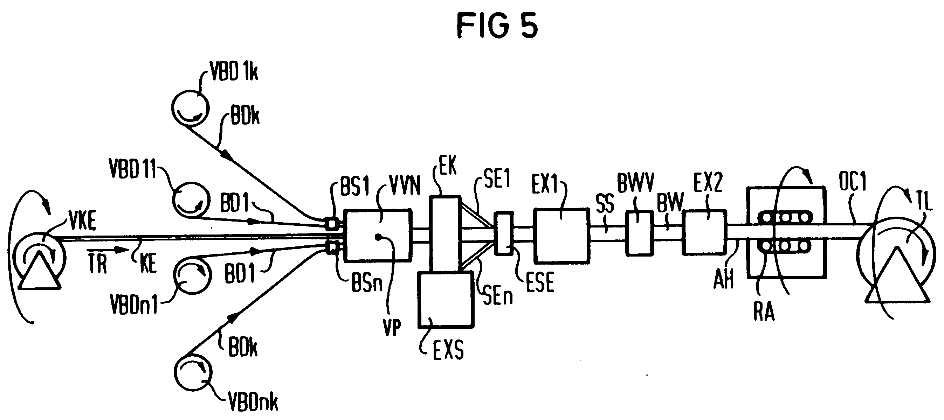

Figur 5 zeigt eine zu Figur 4 gleichartige Einrichtung zur Herstellung des optischen Kabels OC1 nach Figur 1 lediglich mit dem Unterschied, daß die Vorratsspulen VSEl bis VSEn für die Stützelemente SEl - SEn weggelassen sind. Die unverändert übernommenen Elemente sind mit den gleichen Bezugszeichen wie in Figur 4 versehen. Nach der Vorrichtung VVN wird ein Extruder EXS mit einem als Vielfachdüse ausgebildeten Extruderkopf EK angeordnet. Dabei entsprechen die Düsenöffnungen der Vielfachdüse im Extruderkopf EK dem Profil der Stützelemente SEl bis SEn. Während des Herstellungsprozesses werden aus der Vielfachdüse des Extruderkopfes EK selbständige Stränge von Stützelementen SEl bis SEn extrudiert. Diese werden abgekühlt und mittels der Einführungseinrichtung ESE auf ihre vorgesehene Position zwischen den Bandstapeln BSl - BSn gebracht.

Gegebenenfalls können die Bandstapel BSl - BSn mit den dazwischen einzufügenden Stützelementen SEl - SEn auch SZ-verseilt werden. Dann stehen z.B. die beiden Vorratsspulen VKE und TL fest, während das Zentralelement KE bzw. die Kabelseele auf einer Verseilstrecke zwischen einem ersten, RA entsprechenden, zusätzlichen Raupenabzug vor dem Verseilpunkt VP und dem Raupenabzug RA mit wechselnder Schlagrichtung rotiert bzw. tordiert wird. Diese beiden SZ-Raupenabzüge rotieren vorteilhaft etwa synchron. Der zusätzliche Raupenabzug ist zugunsten der Übersichtlichkeit in Figur 5 weggelassen worden.

## Patentansprüche

1. Optisches Kabel (0C1) mit mehreren Bandstapeln (BSl bis BSn) aus Lichtwellenleiter-Bändchen (BDl bis BDk), die in mindestens einer Lage um ein Kernelement (KE) herum angeordnet sind,
**dadurch gekennzeichnet,**
daß in den von den Bandstapeln (BSl bis BSn) gebildeten Zwickelräume als selbständige Stränge ausgebildete Stützelemente (SEl bis SEn) vorgesehen sind,
und daß sich diese Stützelemente (SEl bis SEn) in radialer Richtung mindestens genauso weit wie die Bandstapel (BSl mit BSn) erstrecken, derart, daß diese Stützelemente (SEl bis SEn) zu einer Lagesicherung der Bandstapel (BSl bis BSn) in radialer Richtung und/oder in Umfangsrichtung beitragen.

2. Optisches Kabel nach Anspruch 1,
**dadurch gekennzeichnet,**
daß das Kernelement (KE) mindestens ein zugfestes Element (CE) aufweist.

3. Optisches Kabel nach Anspruch 2,
**dadurch gekennzeichnet,**
daß auf dem zugfesten Element (CE) eine Aufdickungsschicht (AS) aufgebracht ist.

4. Optisches Kabel nach einem der vorhergehenden Ansprüche,
**dadurch gekennzeichnet,**
daß das Kernelement als Rohr (KR) ausgebildet ist.

5. Optisches Kabel nach Anspruch 4,
**dadurch gekennzeichnet,**
daß im Rohr (KR) mindestens ein Lichtwellenleiter (LWLl bis LWLn) angeordnet ist.

6. Optisches Kabel nach einem der vorhergehenden Ansprüche,
**dadurch gekennzeichnet,**
daß die Bandstapel (BSl bis BSn) direkt auf dem Kernelement (KE) angeordnet sind.

7. Optisches Kabel nach einem der vorhergehenden Ansprüche,
**dadurch gekennzeichnet,**
daß die Bandstapel (BSl bis BSn) mit ihren radial innersten Bandleitung (z.B. DBl) jeweils in Umfangssrichtung bogenförmig gekrümmt am Kernelement (KE) angschmiegend angeordnet sind.

8. Optisches Kabel nach einem der vorhergehenden Ansprüche,
**dadurch gekennzeichnet,**
daß die Lichtwellenleiter-Bändchen (BDl bis BDk) zu einem etwa rechteckförmigen Bandstapel zusammengefaßt sind.

9. Optisches Kabel nach einem der Ansprüche 1 bis 7,
**dadurch gekennzeichnet,**
daß die Lichtwellenleiter-Bändchen (BDl bis BDk) innerhalb ihres Bandstapels nach außen hin mit einer zunehmenden Zahl von Lichtwellenleitern (LWl bis LWm) versehen sind.

10. Optisches Kabel nach einem der vorhergehenden Ansprüche,
**dadurch gekennzeichnet,**
daß die radiale Erstreckung der Bandstapel (BSl bis BSn) kleiner als ihre Erstreckung um den Umfang gewählt ist.

11. Optisches Kabel nach einem der vorhergehenden Ansprüche,
**dadurch gekennzeichnet,**
daß für die Bandstapel (BSl bis BSn) eine radiale Erstreckung zwischen 1 mm und 3 mm, bevorzugt zwischen 1,5 und 2 mm, und eine Erstreckung längs des Umfangs zwischen 1,5 mm und 5 mm, bevorzugt zwischen 2 und 3 mm, gewählt ist.

12. Optisches Kabel nach einem der vorhergehenden Ansprüche,
**dadurch gekennzeichnet,**
daß für die Bandstapel (BSl bis BSn) zwischen 2 und 10 Lichtwellenleiter-Bändchen (BDl bis BDk) mit vorzugsweise jeweils 2 bis 16 Lichtwellenleitern vorgesehen sind.

13. Optisches Kabel nach einem der vorhergehenden Ansprüche,
**dadurch gekennzeichnet,**
daß zwischen den Lichtwellenleiter-Bändchen (BDl bis BDk) und/oder verbleibenden Zwickelräumen eine Füllmasse vorgesehen ist.

14. Optisches Kabel nach Anspruch 13,
**dadurch gekennzeichnet,**
daß die Füllmasse haftend ausgebildet ist.

15. Optisches Kabel nach einem der vorhergehenden Ansprüche,
**dadurch gekennzeichnet,**
daß die Bandstapel (BSl bis BSn) auf das Kernelement (KE) aufgeseilt sind.

16. Optisches Kabel nach Anspruch 15,
**dadurch gekennzeichnet,**
daß für die Bandstapel (BSl bis BSn) eine Schlaglänge zwischen 400 und 700 mm gewählt ist.

17. Optisches Kabel nach einem der vorhergehenden Ansprüche,
**dadurch gekennzeichnet,**
daß benachbarte Bandstapel (BSl bis BSn) an ihrer Basis bei ihrer radial innersten Bandleitung einen Abstand zwischen 0,5 mm und 1,5 mm aufweisen.

18. Optisches Kabel nach einem der vorhergehenden Ansprüche,
**dadurch gekennzeichnet,**
daß die Stützelemente (SEl bis SEn) auf dem Kernelement (KE) aufliegen.

19. Optisches Kabel nach einem der vorhergehenden Ansprüche,
**dadurch gekennzeichnet,**
daß die Stützelemente (SEl bis SEn) die Zwickelräume nur teilweise ausfüllen.

20. Optisches Kabel nach einem der Ansprüche 1 - 18,
**dadurch gekennzeichnet,**
daß die Stützelemente (SEl bis sEn) die Zwickel zwischen den Bandstapeln (BSl bis BSn) weitgehend ausfüllen.

21. Optisches Kabel nach einem der vorhergehenden Ansprüche,
**dadurch gekennzeichnet,**
daß die Stützelemente (SEl bis SEn) einen etwa keilförmigen Querschnitt aufweisen.

22. Optisches Kabel nach einem der vorhergehenden Ansprüche,
**dadurch gekennzeichnet,**
daß für die Stützelemente (SEl - SEn) ein steifes Material gewählt ist.

23. Optisches Kabel nach einem der Ansprüche 1 bis 21,
**dadurch gekennzeichnet,**
daß für die Stützelemente (SEl bis SEn) ein leicht verformbares Material verwendet ist.

24. Optisches Kabel nach einem der vorhergehenden Ansprüche,
**dadurch gekennzeichnet,**
daß für die Stützelemente (SEl bis SEn) ein quellmittelbehaftetes Material gewählt ist.

25. Optisches Kabel nach einem der vorhergehenden Ansprüche,
**dadurch gekennzeichnet,**
daß die Stützelemente (SEl - SEn) aus unterschiedlichen Materialien zusammengesetzt sind.

26. Optisches Kabel nach Anspruch 25,
**dadurch gekennzeichnet,**
daß die Stützelemente (SEl bis SEn) einen sich radial erstreckenden harten Stützkörper (STn) im Inneren und gegebenenfalls einen polsternden Außenbereich aufweisen.

27. Optisches Kabel nach Anspruch 25 oder 26,
**dadurch gekennzeichnet,**
daß in die Stützelemente (SEl bis SEn) jeweils ein quer zu ihrer radialen Erstreckung verlaufender, steifer Stützkörper (QTn) eingelagert ist.

28. Optisches Kabel nach Anspruch 25,
**dadurch gekennzeichnet,**
daß in die Stützelemente (SEl bis SEn) jeweils ein T-trägerförmiger Stützkörper (TTn) eingelagert ist.

29. Optisches Kabel nach einem der vorhergehenden Ansprüche,
**dadurch gekennzeichnete,**
daß die Stützelemente (SEl bis SEn) in ihrer Lage fixiert sind.

30. Optisches Kabel nach einem der vorhergehenden Ansprüche,
**dadurch gekennzeichnet,**
daß mehrere Lagen (LA1, LA2) aus Bandstapeln (BSl bis BSn, BSI* bis BSn*) und dazwischenliegenden Stützelementen (SEl bis SEn, SEl* bis SEn*) vorgesehen sind.

31. Optisches Kabel nach einem der vorhergehenden Ansprüche,
**dadurch gekennzeichnet,**
daß auf mindestens einer Verseillage (LA1, LA2) aus Bandstapeln (BSI bis BSn) und dazwischen eingelagerten Stützelementen (SEl bis SEn) von außen eine Abdeckschicht (SS) aufgebracht ist.

32. Optisches Kabel nach Anspruch 31,
**dadurch gekennzeichnet,**
daß die Abdeckschicht (SS) eine dünne harte Außenschicht (HAS) aufweist.

33. Optisches Kabel nach einem der Ansprüche 31 oder 32,
**dadurch gekennzeichnet,**
daß die Abdeckschicht (SS) eine weiche, polsternde Innenschicht (WIS) aufweist.

34. Optisches Kabel nach einem der Ansprüche 31 bis 33,
**dadurch gekennzeichnet,**
daß die Abdeckschicht (SS) als querdruckfestes Rohr ausgebildet ist.

35. Optisches Kabel nach einem der vorhergehenden Ansprüche,
**dadurch gekennzeichnet,**
daß außen mindestens ein Außenmantel (AH) und/oder mindestens eine Bewehrung (BW) vorgesehen ist.

36. Optisches Kabel nach einem der vorhergehenden Ansprüche,
**dadurch gekennzeichnet,**
daß die Bandstapel (BSl - BSn) jeweils in Kammerelementen untergebracht sind.

37. Verfahren zur Herstellung eines optischen Kabels (0C1) nach einem der vorhergehenden Ansprüche,
**dadurch gekennzeichnet,**
daß die als selbständige Stränge ausgebildeten Stützelemente (SEl bis SEn) in die von den Bandstapeln (BSI bis BSn) gebildeten Zwickelräume von außen mit einer Erstreckung in radialer Richtung mindestens genauso weit wie die radiale Erstreckung der Bandstapel (BSl bis BSn) eingebracht werden, derart, daß die Bandstapel (BSl bis BSn) in ihrer Lage in radialer Richtung und/oder in Umfangsrichtung gesichert werden.

38. Verfahren nach Anspruch 37,
**dadurch gekennzeichnet,**
daß auf eine erste Lage (LA1) mindestens eine weitere Lage (LA2) aus Bandstapeln (BSl bis BSn) und Stützelementen (SEl bis SEn) aufgebracht wird.

39. Verfahren nach Anspruch 37 oder Anspruch 38
**dadurch gekennzeichnet,**
daß die Bandstapel (BSI bis BSn) und die strangförmigen Stützelemente (SEl bis SEn) gemeinsam in ihre jeweilige Lage (LA1, LA2) verseilt werden.

40. Verfahren nach einem der Ansprüche 37 bis 39,
**dadurch gekennzeichnet,**
daß die von Vorratsspulen (VBDll bis VBDlk; VBDnl bis VBDnk) abgezogenen Lichtwellenleiter-Bändchen (BDl bis BDk) zu Bandstapeln (BSl bis BSn) zusammengefaßt werden, daß diese um das Kernelement (KE) angebracht werden, daß die Stützelemente (SEl bis SEn) von Vorratsspulen (VSEl bis VSEn) abgezogen werden und daß diese in die Zwickelräume zwischen den Bandstapeln (BSl bis BSn) eingebracht werden.

41. Verfahren nach einem der Ansprüche 37 bis 40,
**dadurch gekennzeichnet,**
daß nach dem Anbringen der Bandstapel (BSl bis BSn) in der jeweiligen Verseillage (LA1, LA2) diese durch einen Extruderkopf (EK) hindurchgeführt werden, der Stränge von Stützelementen (SEl bis SEn) extrudiert und daß diese Stützelemente (SEl bis SEn) in die Zwickelräume zwischen den Bandstapeln (BSl bis BSn) mit Hilfe einer Einführungseinrichtung (ESE) eingebracht werden.

42. Verfahren nach einem der Ansprüche 37 bis 40,
**dadurch gekennzeichnet,**
daß auf mindestens einer Verseillage (LA1, LA2) aus Bandstapeln (BSl bis BSn, BSl* bis BSn*) und dazwischen eingelagerten Stützelementen (SE1 bis SEn) von außen eine Abdeckschicht (SSl, SS2*) aufgebracht wird.

43. Verfahren nach einem der Ansprüche 37 bis 42,
**dadurch gekennzeichnet,**
daß außen mindestens eine Außenhülle (AH) und/oder eine Bewehrung (BW) aufgebracht wird.

## Claims

1. Optical cable (OC1) with a plurality of ribbon stacks (BSl to BSn) of optical waveguide ribbons (BDl to BDk) which are arranged in at least one layer around a core element (KE), characterized in that supporting elements (SEl to SEn) designed as independent profiles are provided in the interstices formed by the ribbon stacks (BSl to BSn), and in that said supporting elements (SET to SEn) extend in the radial direction at least just as far as the ribbon stacks (BSl to BSn) such that said supporting elements (SEl to SEn) contribute to a positional securing of the ribbon stacks (BSl to BSn) in the radial direction and/or in the circumferential direction.

2. Optical cable according to claim 1, characterized in that the core element (KE) has at least one tensile-load-resistant element (CE).

3. Optical cable according to Claim 2, characterized in that a thickening layer (AS) is applied to the tensile-load-resistant element (CE).

4. Optical cable according to one of the preceding claims, characterized in that the core element is designed as a tube (KR).

5. Optical cable according to claim 4, characterized in that at least one optical waveguide (LWLl to LWLn) is arranged in the tube (KR).

6. Optical cable according to one of the preceding claims, characterized in that the ribbon stacks (BSl to BSn) are arranged directly on the core element (KE).

7. Optical cable according to one of the preceding claims, characterized in that the ribbon stacks (BSl to BSn) are arranged with their radially innermost ribbon line (e.g. DBl) in each case nestling in the circumferential directional, curved in an arcuate manner, against the core element (KE).

8. Optical cable according to one of the preceding claims, characterized in that the optical waveguide ribbons (BDl to BDk) are assembled to form an approximately rectangular ribbon stack.

9. Optical cable according to one of claims 1 to 7, characterized in that the optical waveguide ribbons (BDl to BDk) within their ribbon stack are provided with an increasing number of optical waveguides (LWl to LWm) towards the outside.

10. Optical cable according to one of the preceding claims, characterized in that the radial extent of the ribbon stacks (BSl to BSn) is chosen smaller than their extent about the circumference.

11. Optical cable according to one of the preceding claims, characterized in that a radial extent between 1 mm and 3 mm, preferably between 1.5 and 2 mm, and an extent along the circumference of between 1.5 mm and 5 mm, preferably between 2 and 3 mm, is chosen for the ribbon stacks (BSl to BSn).

12. Optical cable according to one of the preceding claims, characterized in that between 2 and 10 optical waveguide ribbons (BDl to BDk) with preferably 2 to 16 optical waveguides each are provided for the ribbon stacks (BSl to BSn).

13. Optical cable according to one of the preceding claims, characterized in that a filling material is provided between the optical waveguide ribbons (BDl to BDk) and/or remaining interstices.

14. Optical cable according to Claim 13, characterized in that the filling material is designed so as to be adhesive.

15. Optical cable according to one of the preceding claims, characterized in that the ribbon stacks (BSl to BSn) are laid up on the core element (KE).

16. Optical cable according to Claim 15, characterized in that a lay length of between 400 and 700 mm is chosen for the ribbon stacks (BSl to BSn).

17. Optical cable according to one of the preceding claims, characterized in that adjacent ribbon stacks (BSl to BSn) have at their base, at their radially innermost ribbon line, a clearance of between 0.5 mm and 1.5 mm.

18. Optical cable according to one of the preceding claims, characterized in that the supporting elements (SEl to SEn) bear against the core element (KE).

19. Optical cable according to one of the preceding claims, characterized in that the supporting elements (SE1 to SEn) only partly fill the interstices.

20. Optical cable according to one of Claims 1 -18, characterized in that the supporting elements (SEl to SEn) largely completely fill the interstices between the ribbon stacks (BSl to BSn).

21. Optical cable according to one of the preceding claims, characterized in that the supporting elements (SEl to SEn) have an approximately wedge-shaped cross section.

22. Optical cable according to one of the preceding claims, characterized in that a stiff material is chosen for the supporting elements (SEl - SEn).

23. Optical cable according to one of Claims 1 to 21, characterized in that an easily deformable material is used for the supporting elements (SEl to SEn).

24. Optical cable according to one of the preceding claims, characterized in that a material containing swelling agent is chosen for the supporting elements (SEl to SEn).

25. Optical cable according to one of the preceding claims, characterized in that the supporting elements (SEl-SEn) are composed of varying materials.

26. Optical cable according to Claim 25, characterized in that the supporting elements (SEl to SEn) have a radially extending hard supporting body (STn) in the interior and, if appropriate, a cushioning outer region.

27. Optical cable according to Claim 25 or 26, characterized in that a stiff supporting body (QTn) running transversely to the radial extent of the supporting elements (SEl to SEn) in each case is incorporated into the latter.

28. Optical cable according to Claim 25, characterized in that one T-girder-shaped supporting body (TTn) in each case is incorporated into the supporting elements (SEl to SEn).

29. Optical cable according to one of the preceding claims, characterized in that the supporting elements (SEl to SEn) are fixed in their position.

30. Optical cable according to one of the preceding claims, characterized in that a plurality of layers (LA1, LA2) comprising ribbon stacks (BSl to BSn, BSl* to BSn*) and supporting elements (SEl to SEn, SEl* to SEn*) lying therebetween are provided.

31. Optical cable according to one of the preceding claims, characterized in that a cover layer (SS) is applied externally on at least one lay-up layer (LA1, LA2) of ribbon stacks (BSl to BSn) and supporting elements (SEl to SEn) incorporated therebetween.

32. Optical cable according to Claim 31, characterized in that the cover layer (SS) has a thin, hard outer layer (HAS).

33. Optical cable according to one of Claims 31 or 32, characterized in that the cover layer (SS) has a soft, cushioning inner layer (WIS).

34. Optical cable according to one of Claims 31 to 33, characterized in that the cover layer (SS) is designed as a transverse-pressure-resistant tube.

35. Optical cable according to one of the preceding claims, characterized in that at least one outer sheath (AH) and/or at least one reinforcement (BW) is provided on the outside.

36. Optical cable according to one of the preceding claims, characterized in that the ribbon stacks (BSl-BSn) are accommodated in chamber elements in each case.

37. Method for producing an optical cable (OC1) according to one of the preceding claims, characterized in that the supporting elements (SEl to SEn) designed as independent profiles are introduced externally into the interstices formed by the ribbon stacks (BSl to BSn), with an extent in the radial direction at least just as far as the radial extent of the ribbon stacks (BSl to BSn), such that the ribbon stacks (BSl to BSn) are secured in their position in the radial direction and/or in the circumferential direction.

38. Method according to Claim 37, characterized in that at least one further layer (LA2) of ribbon stacks (BS1 to BSn) and supporting elements (SEl to SEn) is applied onto a first layer (LA1).

39. Method according to Claim 37 or claim 38, characterized in that the ribbon stacks (BSl to BSn) and the profile-shaped supporting elements (SEl to SEn) are laid up jointly into their respective layer (LA1, LA2).

40. Process according to one of Claims 37 to 39, characterized in that the optical waveguide ribbons (BDl to BDk) taken off from supply bobbins (VBDll to VBDlk; VBDnl to VBDnk) are combined to form ribbon stacks (BSl to BSn), in that the latter are applied around the core element (KE), in that the supporting elements (SEl to SEn) are taken off from supply bobbins (VSEl to vSEn) and in that said supporting elements (SEl to SEn) are introduced into the interstices between the ribbon stacks (BSl to BSn).

41. Method according to one of Claims 37 to 40, characterized in that, after the application of the ribbon stacks (BSl to BSn) in the respective lay-up layer (LA1, LA2), said ribbon stacks (BSl to BSn) are passed through an extruder head (EK) which extrudes profiles of supporting elements (SEl to SEn) and in that said supporting elements (SEl to SEn) are introduced into the interstices between the ribbon stacks (BSl to BSn) with the aid of a feed device (ESE).

42. Method according to one of Claims 37 to 40, characterized in that a cover layer (SSl, SS2*) is applied externally onto at least one lay-up layer (LA1, LA2) of ribbon stacks (BSl to BSn, BSl* to BSn*) and supporting elements (SEl to SEn) incorporated therebetween.

43. Method according to one of Claims 37 to 42, characterized in that at least one outer sleeve (AH) and/or a reinforcement (BW) is applied externally.

## Revendications

1. Câble optique (OC1) comportant plusieurs empilages de bandes (BSl à BSn) en bandes (BDl à BDk) de guides d'ondes lumineuses qui sont disposés en au moins une couche autour d'un élément de coeur (KE),
caractérisé par le fait que des éléments d'appui (SEl à SEn), qui sont réalisés en tant que tronçons indépendants, sont prévus dans les espaces en forme de coin laissés par les empilages de bandes (BSl à BSn),
et qu'en direction radiale ces éléments d'appui (SEl à SEn) s'étendent au moins aussi loin que les empilages de bandes (BSl à BSn), de telle sorte qu'en direction radiale et/ou en direction circonférentielle, ces éléments d'appui (SEl à SEn) contribuent à un blocage en position des empilages de bandes (BSl à BSn).

2. Câble optique selon la revendication 1,
caractérisé par le fait que l'élément de coeur (KE) comporte au moins un élément (CE) de résistance à la traction.

3. Câble optique selon la revendication 2,
caractérisé par le fait qu'une couche d'épaississement (AS) est appliquée sur l'élément (CE) de résistance à la traction.

4. Câble optique selon l'une quelconque des revendications précédentes,
caractérisé par le fait que l'élément de coeur est réalisé sous la forme d'un tube (KR).

5. Câble optique selon la revendication 4,
caractérisé par le fait qu'au moins un guide d'ondes lumineuses (LWLl à LWLn) est disposé dans le tube (KR).

6. Câble optique selon l'une quelconque des revendications précédentes,
caractérisé par le fait que les empilages de bandes (BSl à BSn) sont disposés directement sur l'élément de coeur (KE).

7. Câble optique selon l'une quelconque des revendications précédentes,
caractérisé par le fait que les empilages de bandes (BSl à BSn) sont disposés sur l'élément de coeur (KE) par leur bande située radialement le plus à l'intérieur (par exemple BDl) en étant cintrés en forme d'arc dans la direction circonférentielle, et en en épousant la forme.

8. Câble optique selon l'une quelconque des revendications précédentes,
caractérisé par le fait que les bandes (BDl à BDk) de guides d'ondes lumineuses sont regroupées en un empilage de bandes sensiblement rectangulaire.

9. Câble optique selon l'une quelconque des revendications 1 à 7,
caractérisé par le fait qu'au sein de leur empilage de bandes, les bandes (BDl à BDk) de guides d'ondes lumineuses ont, en allant vers l'extérieur, un nombre croissant de guides d'ondes lumineuses (LWl à LWm).

10. Câble optique selon l'une quelconque des revendications précédentes,
caractérisé par le fait que l'étendue radiale des empilages de bandes (BSl à BSn) est choisie inférieure à leur étendue autour de la circonférence.

11. Câble optique selon l'une quelconque des revendications précédentes,
caractérisé par le fait que pour les empilages de bandes (BSl à BSn), on choisît une étendue radiale qui est comprise entre 1 mm et 3 mm, de préférence entre 1,5 et 2 mm, et une étendue le long de la circonférence qui est comprise entre 1,5 mm et 5 mm, de préférence entre 2 et 3 mm.

12. Câble optique selon l'une quelconque des revendications précédentes,
caractérisé par le fait que pour les empilages de bandes (BSl à BSn), on prévoit entre 2 et 10 bandes (BDl à BDk) de guides d'ondes lumineuses comportant respectivement de préférence 2 à 16 guides d'ondes lumineuses.

13. Câble optique selon l'une quelconque des revendications précédentes,
caractérisé par le fait qu'une masse de remplissage est prévue entre les bandes (BDl à BDk) de guides d'ondes lumineuses et/ou les espaces en forme de coin subsistants.

14. Câble optique selon la revendication 13,
caractérisé par le fait que la masse de remplissage est adhérente.

15. Câble optique selon l'une quelconque des revendications précédentes,
caractérisé par le fait que les empilages de bandes (BSl à BSn) sont appliqués par câblage sur l'élément de coeur (KE).

16. Câble optique selon la revendication 15,
caractérisé par le fait que pour les empilages de bandes (BSl à BSn), on choisit un pas de câblage qui est compris entre 400 et 700 mm.

17. Câble optique selon l'une quelconque des revendications précédentes,
caractérisé par le fait qu'au niveau de leur base à proximité de leur guide de bande situé radialement le plus à l'intérieur, l'écartement entre des empilages de bandes (BSl à BSn) voisins est compris entre 0,5 mm et 1,5 mm.

18. Câble optique selon l'une quelconque des revendications précédentes,
caractérisé par le fait que les éléments d'appui (SEl à SEn) prennent appui sur l'élément de coeur (KE).

19. Câble optique selon l'une quelconque des revendications précédentes,
caractérisé par le fait que les éléments d'appui (SEl à SEn) ne remplissent que partiellement les espaces en forme de coin.

20. Câble optique selon l'une quelconque des revendications 1 à 18,
caractérisé par le fait que les éléments d'appui (SEl à SEn) remplissent dans une large mesure les coins entre les empilages de bandes (BSl à BSn).

21. Câble optique selon l'une quelconque des revendications précédentes,
caractérisé par le fait que les éléments d'appui (SEl à SEn) ont une section transversale approximativement cunéiforme.

22. Câble optique selon l'une quelconque des revendications précédentes,
caractérisé par le fait qu'on choisit un matériau rigide pour les éléments d'appui (SEl à SEn).

23. Câble optique selon l'une quelconque des revendications 1 à 21,
caractérisé par le fait qu'on utilise un matériau facilement déformable pour les éléments d'appui (SEl à SEn).

24. Câble optique selon l'une quelconque des revendications précédentes,
caractérisé par le fait qu'on choisit un matériau contenant un agent gonflant pour les éléments d'appui (SEl à SEn).

25. Câble optique selon l'une quelconque des revendications précédentes,
caractérisé par le fait que les éléments d'appui (SE1 à SEn) sont constitués de matériaux différents.

26. Câble optique selon la revendication 25,
caractérisé par le fait que les éléments d'appui (SEl à SEn) comportent un corps d'appui dur (STn) qui s'étend radialement et, le cas échéant, une zone extérieure de rembourrage.

27. Câble optique selon la revendication 25 ou 26,
caractérisé par le fait qu'un corps d'appui rigide (QTn) est inséré dans les éléments d'appui (SEl à SEn), en s'étendant transversalement à leur étendue radiale.

28. Câble optique selon la revendication 25,
caractérisé par le fait qu'un corps d'appui (TTn) en forme de T porteur est inséré dans les éléments d'appui (SEl à SEn).

29. Câble optique selon l'une quelconque des revendications précédentes,
caractérisé par le fait que les éléments d'appui (SEl à SEn) sont immobilisés dans leur position.

30. Câble optique selon l'une quelconque des revendications précédentes,
caractérisé par le fait qu'on prévoit plusieurs couches (LA1, LA2) constituées d'empilages de bandes (BSl à BSn, BSl* à BSn*) et d'éléments d'appui (SEl à SEn, SEl* à SEn*) interposés.

31. Câble optique selon l'une quelconque des revendications précédentes,
caractérisé par le fait qu'une couche de recouvrement (SS) est appliquée de l'extérieur sur au moins une couche de câblage (LA1, LA2) constituée d'empilages de bandes (BSl à BSn) et d'éléments d'appui (SEl à SEn) interposés.

32. Câble optique selon la revendication 31,
caractérisé par le fait que la couche de recouvrement (SS) comporte une mince couche extérieure dure (HAS).

33. Câble optique selon l'une des revendications 31 ou 32,
caractérisé par le fait que la couche de recouvrement (SS) comporte une couche intérieure (WIS) souple et de rembourrage.

34. Câble optique selon l'une des revendications 31 à 33,
caractérisé par le fait que la couche de recouvrement (SS) est réalisée sous la forme d'un tube résistant à la compression transversale.

35. Câble optique selon l'une quelconque des revendications précédentes,
caractérisé par le fait qu'il est prévu à l'extérieur au moins une gaine extérieure (AH) et/ou au moins une armature (BW).

36. Câble optique selon l'une quelconque des revendications précédentes,
caractérisé par le fait que les empilages de bandes (BSl à BSn) sont logés dans des éléments de chambre.

37. Procédé destiné à la fabrication d'un câble optique (OC1) selon l'une quelconque des revendications précédentes,
caractérisé par le fait que, dans les espaces en forme de coin laissés par les empilages de bandes (BSl à BSn), les éléments d'appui (SEl à SEn), qui sont conçus en tant que tronçons indépendants, sont insérés de l'extérieur en ayant une étendue en direction radiale allant au moins aussi loin que l'étendue radiale des empilages de bandes (BSl à BSn), de telle sorte que les empilages de bandes (BSl à BSn) soient bloqués dans leur position en direction radiale et/ou en direction circonférentielle.

38. Procédé selon la revendication 37,
caractérisé par le fait que sur une première couche (LA1), on applique au moins une autre couche (LA2) constituée d'empilages de bandes (BSl à BSn) et d'éléments d'appui (SEl à SEn).

39. Procédé selon l'une des revendications 37 ou 38,
caractérisé par le fait que les empilages de bandes (BSl à BSn) et les éléments d'appui (SEl à SEn) en forme de tronçons sont câblés en commun dans leur couche respective (LA1, LA2).

40. Procédé selon l'une des revendications 37 à 39,
caractérisé par le fait que les bandes (BDl à BDk) de guides d'ondes lumineuses déroulées de bobines de réserve (VBDll à VBDlk VBDnl à VBDnk) sont regroupées en empilages de bandes (BSl à BSn), que ces derniers sont disposés autour de l'élément de coeur (KE), que les éléments d'appui (SEl à SEn) sont déroulés de bobines de réserve (VSEl à VSEn) et qu'ils sont insérés dans les espaces en forme de coin compris entre les empilages de bandes (BSl à BSn).

41. Procédé selon l'une des revendications 37 à 40,
caractérisé par le fait qu'après la mise en place des empilages de bandes (BSl à BSn) dans la couche respective de câblage (LA1, LA2), ceux-ci passent dans une tête d'extrudeuse (EK) qui extrude des tronçons d'éléments d'appui (SEl à SEn), et que ces éléments d'appui (SEl à SEn) sont insérés dans les espaces en forme de coin compris entre les empilages de bandes (BSl à BSn) à l'aide d'un dispositif d'insertion (ESE).

42. Procédé selon l'une des revendications 37 à 40,
caractérisé par le fait qu'une couche de recouvrement (SSl, SS2*) est appliquée à partir de l'extérieur sur au moins une couche de câblage (LA1, LA2) constituée d'empilages de bandes (BSl à BSn, BSl* à BSn*) et d'éléments d'appui (SEl à SEn) interposés.

43. Procédé selon l'une des revendications 37 à 42,
caractérisé par le fait qu'on applique à l'extérieur au moins une gaine extérieure (AH) et/ou une armature (BW).
